(19) Europäisches Patentamt
European Patent Office
Office européen des brevets

(11) **EP 1 164 717 B1**

(12) **FASCICULE DE BREVET EUROPEEN**

(45) Date de publication et mention
de la délivrance du brevet:
**20.02.2008 Bulletin 2008/08**

(51) Int Cl.:
***H04B 7/005*** *(2006.01)*

(21) Numéro de dépôt: **01401498.9**

(22) Date de dépôt: **11.06.2001**

(54) **Procédé pour le contrôle de puissance d'emission dans un système de radiocommunications mobiles**

Verfahren zur Sendeleistungssteuerung in einem Mobilfunkkommunikationssystem

Method for controlling the transmission power in a mobile radio communication system

(84) Etats contractants désignés:
**AT BE CH CY DE DK ES FI FR GB GR IE IT LI LU MC NL PT SE TR**

(30) Priorité: **13.06.2000 FR 0007534**

(43) Date de publication de la demande:
**19.12.2001 Bulletin 2001/51**

(73) Titulaire: **Alcatel Lucent**
**75008 Paris (FR)**

(72) Inventeur: **Agin, Pascal**
**94370 Sucy en Brie (FR)**

(74) Mandataire: **El Manouni, Josiane et al**
**Alcatel Lucent**
**Intellectual Property & Standards**
**54 rue La Boétie**
**75008 Paris (FR)**

(56) Documents cités:
**EP-A- 0 949 830          EP-A- 0 984 581**
**EP-A- 0 994 576          EP-A- 1 069 704**
**WO-A-98/58461**

**Description**

La présente invention concerne d'une manière générale les systèmes de radiocommunications mobiles, notamment les systèmes dits à accès multiple à répartition par les codes, ou AMRC, ou encore CDMA (pour "Code Division Multiple Access" en anglais).

La présente invention est notamment applicable aux systèmes dits de troisième génération, tels que notamment le système UMTS (pour "Universal Mobile Telecommunication System").

D'une manière générale, dans ces systèmes, un des objectifs est d'augmenter les performances, c'est-à-dire notamment augmenter la capacité et/ou améliorer la qualité de service.

Une technique couramment utilisée est la technique dite de contrôle de puissance, et notamment la technique de contrôle de puissance dite en boucle fermée (ou "closed loop power control" en anglais).

Le but du contrôle de puissance en boucle fermée est de maintenir, pour chaque liaison entre une station de base et une station mobile, un paramètre représentatif de la qualité de transmission sur cette liaison (tel que par exemple le rapport signal-sur-interférence, ou SIR, pour "Signal-to-Interference Ratio" en anglais) le plus proche possible d'une valeur cible. Par exemple, dans le sens descendant (c'est-à-dire de la station de base vers la station mobile), la station mobile estime périodiquement le SIR et compare le SIR estimé à la valeur SIR cible (ou "target SIR" en anglais). Si le SIR estimé est inférieur au SIR cible, la station mobile demande à la station de base d'augmenter sa puissance d'émission. Au contraire, si le SIR estimé est supérieur au SIR cible, la station mobile demande à la station de base de diminuer sa puissance d'émission.

La valeur SIR cible est un paramètre important dans ces systèmes. En effet, si le SIR cible est fixé à une valeur supérieure à la valeur nécessaire, le niveau d'interférence dans le système est inutilement accru, et donc les performances du système sont inutilement dégradées; inversement, si le SIR cible est fixé à une valeur inférieure à la valeur nécessaire, la qualité de service est dégradée pour la liaison considérée.

La valeur SIR cible est généralement choisie en fonction de la qualité de service requise, et est couramment ajustée par un algorithme dit de boucle externe (par opposition à l'algorithme précédent dit aussi algorithme de boucle interne). Le principe de l'algorithme de boucle externe est d'estimer régulièrement la qualité de service et de comparer la qualité de service estimée à la qualité de service requise. La qualité de service est généralement représentée par un taux d'erreur bit (ou BER, pour "bit error rate" en anglais) ou par un taux d'erreur trame (ou FER, pour "frame error rate" en anglais) pour des services de parole, ou encore par un taux d'erreur bloc (ou BLER, pour "block error rate" en anglais) pour des services de données par paquets. Si la qualité de service estimée est inférieure à la qualité de service requise, le SIR cible est accru, sinon, le SIR cible est réduit.

Au contraire de l'algorithme de boucle interne qui doit être rapide pour suivre d'aussi près que possible les variations du SIR, l'algorithme de boucle externe doit être plus lent, car la qualité nécessite d'être moyennée sur une certaine période pour obtenir une estimation fiable. Typiquement, dans les systèmes tels que l'UMTS où les informations transmises sont structurées en trames, elles-mêmes structurées en intervalles de temps (ou « time-slots » en anglais), le SIR du signal reçu est estimé et comparé au SIR cible à chaque intervalle de temps d'une trame, alors que la qualité est moyennée sur plusieurs trames.

Le manque de rapidité de l'algorithme de boucle externe peut cependant soulever des problèmes, notamment dans le cas de changement de qualité de service requise, tel que par exemple:

- un changement de mode de transmission, d'un mode non compressé vers un mode compressé, ou vice versa,
- un changement de service requis (en particulier un changement de débit de transmission),
- un changement de débit de transmission pour un service requis donné (tel que par exemple pour les services de données par paquets),
- un changement dans les conditions d'environnement (par exemple vitesse du mobile, conditions de propagation radio),
- ...etc.

Dans ce qui suit, on s'intéressera plus particulièrement aux problèmes posés, pour le contrôle de puissance, par l'utilisation du mode compressé (ou "compressed mode" en anglais).

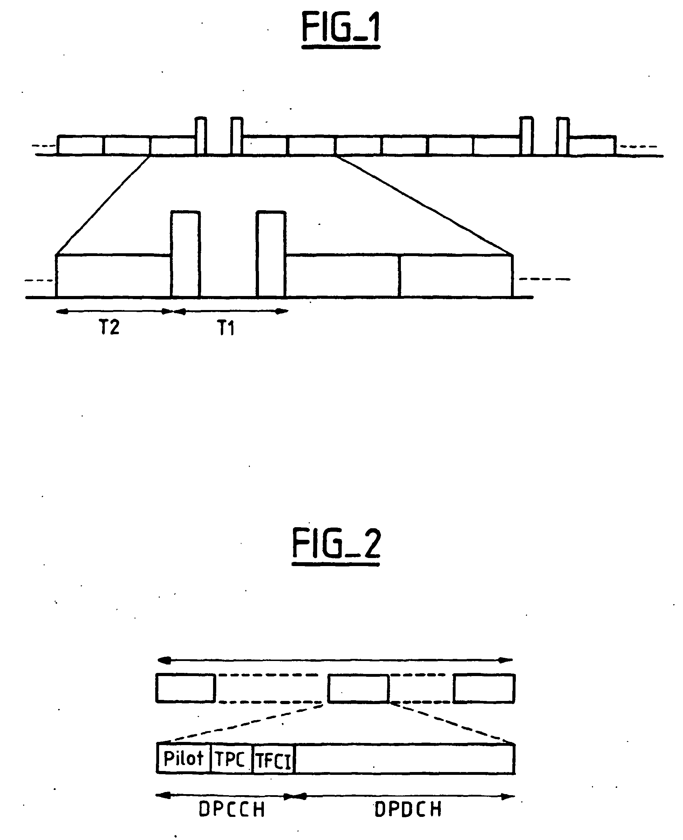

Dans un système tel que l'UMTS par exemple, le mode compressé dans le sens descendant a été introduit pour permettre à une station mobile (ou équipement utilisateur, ou UE pour "User Equipment" en anglais) d'effectuer des mesures sur un fréquence différente de sa fréquence de transmission dans le sens descendant. Il consiste essentiellement à stopper la transmission dans le sens descendant pendant une certaine durée dite ici durée d'interruption de transmission (cette interruption de transmission étant aussi appelée "transmission gap" en anglais). Ceci est rappelé au moyen de la figure 1 illustrant, dans le cas où les informations transmises sont structurées en trames, une série de trames successives comportant des trames compressées (telles que T1 par exemple) et des trames non compressées (telles que T2 par exemple).

Comme le débit instantané est accru dans une trame compressée (en agmentant le taux de codage ou en réduisant le facteur d'étalement), le SIR cible doit être accru approximativement dans la même proportion.

De plus, comme le contrôle de puissance en boucle fermée n'est plus actif pendant la durée d'interruption de transmission, les performances sont dégradées de manière significative, principalement (ainsi que l'a observé le demandeur) pendant la trame compressée et pendant une ou plusieurs trames dites ici de recouvrement (ou "recovery frames" en anglais), suivant la trame compressée. La dégradation peut atteindre plusieurs décibels. Afin de garder la même qualité de service qu'en mode normal (ou non compressé), cet effet devrait aussi être compensé en accroissant le SIR cible pendant ces trames.

Cependant, l'algorithme de boucle externe étant un procédé lent, plusieurs trames seront probablement nécessaires avant de changer le SIR cible de manière correspondante, et le SIR cible risque même d'être accru juste après les trames compressées ou de recouvrement, à un moment où cela n'est plus souhaité, d'où dans tous les cas une dégradation des performances.

Dans la demande de brevet européen n° 99401766.3 déposée le 13 juillet 1999 par le demandeur, une solution a été proposée pour éviter une telle dégradation de performances en mode compressé.

Brièvement, l'idée de base dans cette demande antérieure est d'anticiper la variation de SIR cible, c'est-à-dire d'appliquer une variation correspondante ΔSIR, de manière anticipé, au SIR cible.

Selon une autre idée contenue dans cette demande antérieure, l'accroissement de SIR cible dû à l'accroissement de débit instantané, et l'accroissement δSIR de SIR cible dû aux performances dégradées dans les trames compressées (c'est-à-dire dû aux interruptions de transmission) peuvent être séparés.

Pour le sens descendant par exemple, puisque la variation de débit est connue de l'UE, seul l'accroissement de SIR cible additionnel δSIR dû aux performances dégradées pendant les trames compressées nécessite être signalé par le réseau à l'UE. Le supplément de ressource de signalisation nécessaire peut être faible si cette variation est signalée avec d'autres paramètres de mode compressé (incluant la durée des interruptions de transmission, leur période, ...).

L'UE pourra accroître le SIR cible de ΔSIR juste avant la trame compressée (ou juste après l'interruption de transmission de la trame compressée) et le réduire de la même valeur juste après la trame compressée. Cette variation de SIR cible s'ajoute à l'algorithme classique de boucle externe qui devra en tenir compte.

Selon une autre idée contenue dans cette demande antérieure, au moins quand l'interruption de transmission est à la fin d'une trame compressée, les performances dans les trames de recouvrement peuvent aussi être dégradées à cause de l'interruption du contrôle de puissance pendant l'interruption de transmission. Il serait donc aussi souhaitable d'accroître le SIR cible dans les trames de recouvrement et de signaler cet accroissement de SIR cible à l'UE. De façon alternative, la même valeur δSIR que pour les trames compressées pourrait être utilisée de façon à réduire la quantité de signalisation nécessaire.

Ainsi, selon cette demande antérieure, en anticipant la variation de SIR cible pendant les trames compressées et les trames de recouvrement, l'efficacité de la boucle externe de contrôle de puissance en mode compressé est augmentée.

Selon une autre idée contenue dans cette demande antérieure, l'UE peut simultanément accroître sa puissance d'émission dans la même proportion avant la trame compressée, et de même de le réduire dans la même proportion après la trame compressée. Ceci permet d'éviter les inconvénients dûs notamment au fonctionnement par pas de l'algorithme de boucle interne, et donc d'atteindre plus rapidement la nouvelle valeur de SIR cible (par exemple, si la variation de SIR cible est de 5dB, et si le pas du contrôle de puissance est de 1 dB, il faudrait, avec l'algorithme classique de boucle interne, cinq intervalles de temps pour atteindre la nouvelle valeur cible).

Ainsi, selon cette demande antérieure, en anticipant également la variation de puissance d'émission, l'efficacité de la boucle interne de contrôle de puissance en mode compressé est également augmentée.

Un problème peut cependant se poser pour obtenir une variation anticipée de puissance d'émission correspondant à la variation de SIR cible. En effet, comme en pratique l'entité du système en charge de déterminer et/ou d'appliquer cette variation anticipée de puissance d'émission ne coïncide pas nécessairement avec l'entité du système en charge de déterminer et/ou d'appliquer la variation de SIR cible, les variations ainsi déterminées et/ou appliquées dans ces différentes entités peuvent être différentes, et les performances peuvent alors être dégradées.

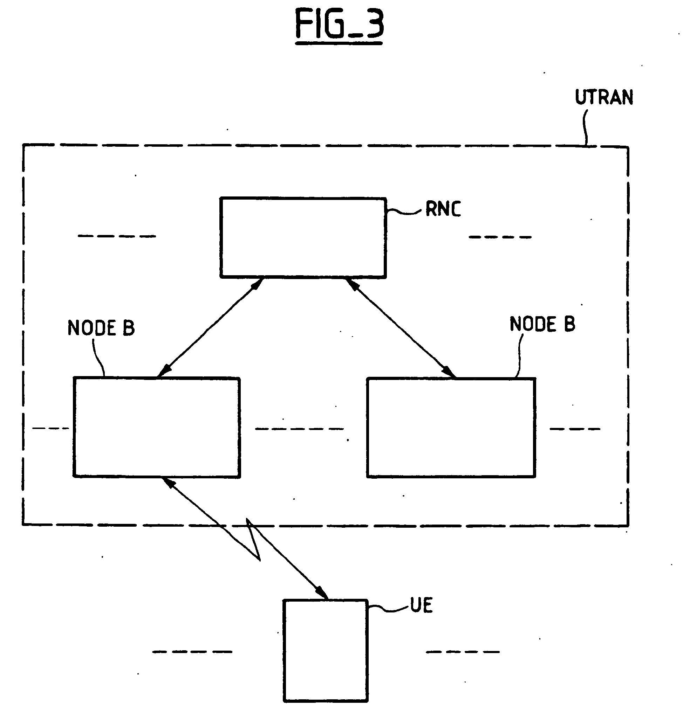

D'une manière générale, un système de radiocommunications mobiles comporte, comme rappelé sur la figure 3, les différentes entités suivantes: des stations mobiles (appelées aussi équipements utilisateurs, ou UE, pour "User Equipment" dans le système UMTS), des stations de base (appelées aussi "Node B" dans l'UMTS), et des contrôleurs de stations de base (appelés aussi RNC, pour "Radio Network Controller" dans l'UMTS). L'ensemble formé par les « Node B » et les RNC est aussi appelé UTRAN, pour "UMTS Terrestrial Radio Access Network".

Généralement la boucle externe de contrôle de puissance est plutôt mise en oeuvre dans le récepteur (UE pour le sens descendant par exemple), car il est plus logique d'effectuer l'estimation de qualité (BER, FER, BLER...) nécessaire à cette boucle externe dans le récepteur. La variation de valeur cible ΔSIR est alors connue du récepteur. Par contre la variation anticipée de puissance d'émission doit être appliquée dans l'émetteur (Node B pour le sens descendant par exemple), et doit donc pour cela être connue également de l'émetteur.

En outre, dans un système tel que l'UMTS, le RNC est en charge du contrôle du réseau et des actions effectuées par l'UE, alors que le Node B est principalement un émetteur-récepteur. Ainsi, la boucle externe de contrôle de puissance dans le sens montant est mise en oeuvre dans le RNC. La boucle interne de contrôle de puissance est réalisée en partie dans l'UE, et en partie dans le le Node B; par exemple, dans le sens montant, le Node B compare le SIR estimé au SIR cible et envoie une commande de contrôle de puissance à l'UE, et l'UE modifie sa puissance transmise en fonction des commandes de contrôle de puissance envoyées par le Node B. La boucle externe de contrôle de puissance dans le sens descendant est mise en oeuvre dans l'UE (certains paramètres nécessaires pour déterminer la valeur $\Delta$SIR, tels que le paramètre $\delta$SIR rappelé précédemment, étant signalés à l'UE par le RNC). Pour cette raison, le Node B ne connaît pas la valeur $\Delta$SIR pour le sens descendant (incluant la composante $\delta$SIR signalée à l'UE par le RNC), mais connaît seulement la valeur $\Delta$SIR pour le sens montant.

Une solution à ce problème, pour l'exemple considéré du sens descendant, serait que le RNC signale, non seulement à l'UE, mais aussi au Node B, le paramètre $\delta$SIR nécessaire pour déterminer cette variation de SIR cible.

Une telle solution a cependant pour inconvénient d'accroître de manière significative les échanges de signalisation nécessaires, et donc de ne pas utiliser efficacement les ressources de transmission disponibles.

Un besoin existe donc pour une solution qui permettrait d'éviter de tels inconvénients, ou plus généralement qui permettrait de réduire la quantité de signalisation nécessaire, sans dégradation de performances.

On rappelle par ailleurs que dans un système tel que notamment l'UMTS, différents canaux appelés aussi canaux physiques dédiés (ou "dedicated physical channels" en anglais) peuvent être transmis simultanément sur un même canal physique.

On distingue deux types de canaux physiques dédiés:

- des canaux physiques dédiés dits de données (ou DPDCH, pour "dedicated physical data channels" en anglais),
- des canaux physiques dédiés dits de contrôle (ou DPCCH, pour "dedicated physical control channels" en anglais).

A chaque UE en mode connecté est alloué un canal DPCCH et un ou plusieurs canaux DPDCH, selon les besoins.

Dans le sens descendant par exemple, les canaux DPDCH et DPCCH sont multiplexés en temps à l'intérieur de chaque intervalle de temps (ou "time-slot" en anglais) d'une trame (ou "frame" en anglais), comme rappelé au moyen de la figure 2.

Comme rappelé également sur la figure 2, le canal DPCCH comporte trois champs:

- un champ « pilote », contenant un signal pilote permettant à la station mobile de rester synchronisée par rapport au réseau, et d'effectuer une estimation du canal de propagation,
- un champ « TPC » (pour "Transmit Power Control command" en anglais), contenant des bits de commande de contrôle de puissance à utiliser par la boucle interne de contrôle de puissance,
- un champ « TFCI » (pour "Transport-Format Combination Indicator" en anglais) contenant des bits d'indication de format de transport, destinés, pour chacun des canaux DPDCH, à indiquer le format de transport utilisé (incluant notamment le schéma de codage, d'entrelacement...etc, fonction du service correspondant).

Comme décrit dans le document 3G TS 25.214 V3.2.0 (2000-03) publié par le 3GPP ("3rd Generation Partnership Project") (cf. point 5.2.1.1 de ce document), l'algorithme de contrôle de puissance contrôle simultanément la puissance des canaux DPCCH et DPDCH, et la puissance d'émission de chacun des champs « TFCI », « TPC » et « Pilote » est décalée par rapport à la puissance d'émission du ou des canaux DPDCH d'un décalage (ou "offset" en anglais) noté respectivement PO1, PO2, PO3, déterminé par le réseau.

Cependant, lorque cette technique est utilisée en combinaison avec la technique d'anticipation de variation de puissance d'émission telle que décrite dans la demande antérieure rappelée précédemment, des problèmes peuvent apparaître, que cette demande antérieure n'avait pas pour principal but de résoudre. Notamment, la puissance d'émission pour au moins un des champs du canal DPCCH peut devenir momentanément supérieure à celle qui serait réellement nécessaire, d'où une augmentation inutile du niveau d'interférence dans le réseau et/ou une réduction inutile de la capacité du réseau, ainsi qu'une augmentation inutile de la consommation de puissance dans l'équipement émetteur considéré.

Un besoin existe également pour une solution qui permettrait d'éviter de tels inconvénients, ou plus généralement qui permettrait d'obtenir des variations anticipées de puissance d'émission qui soient optimales pour chacun de ces différents champs ou canaux.

Un objet de la présente invention est un procédé pour le contrôle de puissance d'émission dans un système de radiocommunications mobiles, dans lequel un algorithme de contrôle de puissance contrôle la puissance d'émission en fonction d'une valeur cible de qualité de transmission, ce procédé étant essentiellement caractérisé en ce que:

- une variation de valeur cible est appliquée pour compenser les effets d'un mode de transmission dit compressé, dans lequel la transmission est interrompue pendant des interruptions de transmission, et le débit est augmenté de manière correspondante pour compenser les interruptions de transmission,
- ladite variation de valeur cible comporte une première composante, destinée à compenser les effets de ladite augmentation de débit, et une seconde composante, destinée à compenser les autres effets des interruptions de transmission,
- une variation anticipée de puissance d'émission est appliquée en correspondance,
- ladite variation anticipée de puissance d'émission correspond à une valeur approchée de ladite variation de valeur cible, obtenue par approximation de ladite deuxième composante .

Suivant une autre caractéristique, pour un sens de transmission donné, une valeur approchée de ladite deuxième composante est obtenue au moyen de ladite deuxième composante pour le sens de transmission opposé.

Suivant une autre caractéristique:

- ledit algorithme de contrôle de puissance contrôle simultanément la puissance d'émission d'au moins deux canaux, dont un canal de données et un canal de contrôle, en fonction d'une valeur cible de qualité de transmission,
- ledit canal de contrôle a sa puissance d'émission décalée par rapport audit canal de données,
- dans le cas de variation de ladite valeur cible, on applique à la puissance d'émission du canal de données et/ou à la puissance d'émission du canal de contrôle et/ou au décalage de la puissance d'émission du canal de contrôle par rapport à la puissance d'émission du canal de données, des variations anticipées permettant d'obtenir une variation anticipée de puissance d'émission du canal de données, qui corresponde à ladite valeur approchée de variation de valeur cible .

Suivant une autre caractéristique, dans le cas de variation de valeur cible, lesdites variations anticipées de puissance d'émission du canal de données et/ou de puissance d'émission du canal de contrôle et/ou de décalage de la puissance d'émission du canal de contrôle par rapport au canal de données, sont déterminées de manière à avoir une même énergie du signal transmis dans le canal de contrôle, avant et après ladite variation de valeur cible, et sur une même période de référence.

Suivant un mode de réalisation, dans le cas de variation de valeur cible, on applique au décalage de la puissance d'émission du canal de contrôle par rapport à la puissance d'émission du canal de données une variation anticipée correspondant à l'opposé de ladite valeur approchée de variation de valeur cible.

Suivant un autre mode de réalisation, dans le cas de variation de valeur cible, on applique à la puissance d'émission du canal de données et à la puissance d'émission du canal de contrôle une variation anticipée correspondant à ladite variation approchée de valeur cible.

Suivant une autre caractéristique, ladite valeur cible est elle-même ajustée par un algorithme d'ajustement en fonction de la qualité de service requise, et ladite variation de valeur cible est destinée, dans le cas de changement de qualité de service requise, à anticiper la variation correspondante de valeur cible ajustée par ledit algorithme d'ajustement.

Un autre objet de la présente invention est un système de radiocommunications mobiles, ce système étant essentiellement caractérisé en ce qu'il comporte, pour la mise en oeuvre d'un procédé suivant l'invention:

- des moyens pour, dans le cas de variation de valeur cible, appliquer une variation anticipée de puissance d'émission, correspondant à ladite valeur approchée de variation de valeur cible.

Suivant une autre caractéristique, ledit système comporte :

- des moyens pour, dans le cas de variation de ladite valeur cible, appliquer à la puissance d'émission du canal de données et/ou à la puissance d'émission du canal de contrôle et/ou au décalage de la puissance d'émission du canal de contrôle par rapport à la puissance d'émission du canal de données, des variations anticipées permettant d'obtenir une variation anticipée de puissance d'émission du canal de données, qui corresponde à ladite valeur approchée de variation de valeur cible .

Suivant une autre caractéristique, ledit système comporte en outre:

- des moyens pour faire en sorte que, dans le cas de variation de valeur cible, lesdites variations anticipées de puissance d'émission du canal de données et/ou de puissance d'émission du canal de contrôle et/ou de décalage de la puissance d'émission du canal de contrôle par rapport au canal de données, permettent d'avoir une même énergie du signal transmis dans le canal de contrôle, avant et après ladite variation de valeur cible, et sur une même période de référence.

Suivant un mode de réalisation, ledit système comporte :

des moyens pour, dans le cas de variation de valeur cible, appliquer au décalage de la puissance d'émission du canal de contrôle par rapport à la puissance d'émission du canal de données une variation anticipée correspondant à l'opposé de ladite valeur approchée de variation de valeur cible.

Suivant un autre mode de réalisation, ledit système comporte :

- des moyens pour, dans le cas de variation de valeur cible, appliquer à la puissance d'émission dudit canal de données et à la puissance d'émission dudit canal de contrôle une variation anticipée correspondant à ladite valeur approchée de variation de valeur cible.

Un autre objet de la présente invention est une station de base, cette station de base étant essentiellement caractérisée en ce qu'elle comporte, pour la mise en oeuvre d'un procédé suivant l'invention, pour le contrôle de puissance dans le sens descendant:

- des moyens pour, dans le cas de variation de valeur cible,appliquer une variation anticipée de puissance d'émission, correspondant à ladite valeur approchée de variation de valeur cible.

Suivant une autre caractéristique, ladite station de base comporte :

- des moyens pour, dans le cas de variation de ladite valeur cible, appliquer à la puissance d'émission du canal de données et/ou à la puissance d'émission du canal de contrôle et/ou au décalage de la puissance d'émission du canal de contrôle par rapport à la puissance d'émission du canal de données, des variations anticipées permettant d'obtenir une variation anticipée de puissance d'émission du canal de données, qui corresponde à ladite valeur approchée de variation de valeur cible .

Suivant une autre caractéristique, ladite station de base comporte en outre:

- des moyens pour faire en sorte que, dans le cas de variation de valeur cible, lesdites variations anticipées de puissance d'émission du canal de données et/ou de puissance d'émission du canal de contrôle et/ou de décalage de la puissance d'émission du canal de contrôle par rapport au canal de données, permettent d'avoir une même énergie du signal transmis dans le canal de contrôle, avant et après ladite variation de valeur cible, et sur une même période de référence.

Suivant un mode de réalisation, ladite station de base comporte:

- des moyens pour appliquer au décalage de la puissance d'émission du canal de contrôle par rapport à la puissance d'émission du canal de données une variation anticipée correspondant à l'opposé de ladite valeur approchée de variation de valeur cible.

Suivant un autre mode de réalisation, ladite station de base comporte:

- des moyens pour appliquer à la puissance d'émission dudit canal de données et à la puissance d'émision dudit canal de contrôle une variation anticipée correspondant à ladite valeur approchée de variation de valeur cible.

Un autre objet de la présente invention est une station de base, cette station de base étant essentiellement caractérisée en ce qu'elle comporte, pour la mise en oeuvre d'un procédé suivant l'invention, pour le contrôle de puissance dans le sens descendant:

- des moyens pour utiliser ladite seconde composante qui lui est signalée par un contrôleur de stations de base pour le contrôle de puissance dans le sens montant, pour déterminer ladite valeur approchée de variation de valeur cible pour le sens descendant.

Un autre objet de la présente invention est une station mobile, cette station mobile étant essentiellement caractérisée en ce qu'elle comporte, pour la mise en oeuvre d'un procédé suivant l'invention, pour le contrôle de puissance dans le sens montant:

- des moyens pour, dans le cas de variation de valeur cible, appliquer une variation anticipée de puissance d'émission, correspondant à ladite valeur approchée de variation de valeur cible.

Suivant une autre caractéristique, ladite station mobile comporte :

- des moyens pour, dans le cas de variation de ladite valeur cible, appliquer à la puissance d'émission du canal de données et/ou à la puissance d'émission du canal de contrôle et/ou au décalage de la puissance d'émission du canal de contrôle par rapport à la puissance d'émission du canal de données, des variations anticipées permettant d'obtenir une variation anticipée de puissance d'émission du canal de données, qui corresponde à ladite valeur approchée de variation de valeur cible .

Suivant une autre caractéristique, ladite station mobile comporte en outre:

- des moyens pour faire en sorte que, dans le cas de variation de valeur cible, lesdites variations anticipées de puissance d'émission du canal de données et/ou de puissance d'émission du canal de contrôle et/ou de décalage de la puissance d'émission du canal de contrôle par rapport au canal de données, permettent d'avoir une même énergie du signal transmis dans le canal de contrôle, avant et après ladite variation de valeur cible, et sur une même période de référence.

Suivant un mode de réalisation, ladite station mobile comporte:

- des moyens pour appliquer au décalage de la puissance d'émission du canal de contrôle par rapport à la puissance d'émission du canal de données une variation anticipée correspondant à l'opposé de ladite valeur approchée de variation de valeur cible.

Suivant un autre mode de réalisation, ladite station mobile comporte:

- des moyens pour appliquer à la puissance d'émission dudit canal de données et dudit canal de contrôle une variation anticipée correspondant à ladite valeur approchée de variation de valeur cible.

Un autre objet de la présente invention est une station mobile, cette station mobile étant essentiellement caractérisée en ce qu'elle comporte, pour la mise en oeuvre d'un procédé suivant l'invention, pour le contrôle de puissance dans le sens montant:

- des moyens pour utiliser ladite seconde composante qui lui est signalée par un contrôleur de stations de base pour le contrôle de puissance dans le sens descendant, pour déterminer ladite valeur approchée de variation de valeur cible pour le sens montant.

Un autre objet de la présente invention est un contrôleur de stations de base, ce contrôleur de stations de base étant essentiellement caractérisé en ce qu'il comporte, pour la mise en oeuvre d'un procédé suivant l'invention,:

- des moyens pour signaler à une station de base et à une station mobile une même valeur pour ladite seconde composante, pour les deux sens de transmission.

D'autres objets et caractéristiques de la présente invention apparaîtront à la lecture de la description suivante d'exemples de réalisation, faite en relation avec les dessins ci-annexés dans lesquels:

- la figure 1 est un schéma destiné à illustrer le principe de la transmission suivant le mode compressé,
- la figure 2 est un schéma destiné à illustrer une structure de trame dans un système tel que notamment le système UMTS,
- la figure 3 rappelle l'architecture générale d'un système de radiocommunications mobiles,
- la figure 4 est un schéma destiné à illustrer deux modes de réalisation pour le contrôle de puissance suivant l'invention dans le cas d'un canal de données et d'un canal de contrôle,
- la figure 5 est un schéma destiné à illustrer un exemple de moyens à prévoir, dans un système de radiocommunications mobiles, pour mettre en oeuvre un procédé suivant l'invention, pour le contrôle de puissance dans le sens descendant,
- la figure 6 est un schéma destiné à illustrer un exemple de moyens à prévoir, dans un système de radiocommunications mobiles, pour mettre en oeuvre un procédé suivant l'invention, pour le contrôle de puissance dans le sens montant.

La présente invention concerne donc le contrôle de puissance dans un système de radiocommunications mobiles.

Plus particulièrement la présente invention concerne un procédé pour le contrôle de puissance d'émission dans un système de radiocommunications mobiles, dans lequel un algorithme de contrôle de puissance contrôle la puissance d'émission en fonction d'une valeur cible de qualité de transmission.

Suivant l'invention :

- une variation de valeur cible est appliquée pour compenser les effets d'un mode de transmission dit compressé, dans lequel la transmission est interrompue pendant des interruptions de transmission, et le débit est augmenté de manière correspondante pour compenser les interruptions de transmission,
- ladite variation de valeur cible comporte une première composante, destinée à compenser les effets de ladite augmentation de débit, et une seconde composante, destinée à compenser les autres effets des interruptions de transmission,
- une variation anticipée de puissance d'émission est appliquée en correspondance,
- ladite variation anticipée de puissance d'émission correspond à une valeur approchée de variation de valeur cible, obtenue par approximation de ladite deuxième composante .

La première composante, destinée à compenser les effets de l'augmentation de débit pendant le mode compressé, peut être connue aussi bien de l'émetteur (par exemple Node B pour le sens descendant) que du récepteur (par exemple UE pour le sens descendant). Cette première composante n'est donc pas en général à l'origine des problèmes de signalisation considérés ici. Ces problèmes se posent plutôt pour la deuxième composante, destinée à compenser tous les autres effets du mode compressé (autres que l'augmentation de débit), tels que par exemple les dégradations dues à l'interruption du contrôle de puissance pendant le mode compressé, les dégradations de codage dans le cas de mode compressé par poinçonnage, ...etc. Une solution aux problèmes de signalisation considérés ici serait de ne pas tenir compte de cette deuxième composante, pour la variation anticipée de puissance d'émission, pour la boucle interne de contrôle de puissance. Cette solution n'est cependant pas la meilleure, et, ainsi que l'a observé le demandeur, une solution consistant à prendre en compte la deuxième composante, même s'il ne s'agit que d'une approximation, permet d'obtenir de meilleurs résultats et de moins dégrader les performances, tout en permettant donc également de réduire la quantité de signalisation nécessaire, qui est également un objectif très important dans ces systèmes.

Une telle approximation peut être obtenue par tous moyens, tels que par exemple par simulation, par des statistiques à partir de valeurs précédemment obtenues, ...etc.

En outre, pour un sens de transmission donné, une valeur approchée de ladite deuxième composante peut être obtenue au moyen de ladite deuxième composante pour le sens de transmission opposé.

Ladite deuxième composante pour le sens de transmission opposé peut être considérée comme constituant une bonne approximation de la deuxième composante pour le sens de transmission considéré, car les canaux de propagation montant et descendant peuvent en général être considérés comme ayant les mêmes caractéristiques. Ceci peut avantageusement être utilisé pour résoudre les problèmes mentionnés précédemment. Par exemple, la deuxième composante pour la variation de valeur cible dans le sens montant étant signalée par le RNC au Node B, le Node B peut alors utiliser cette deuxième composante pour la variation anticipée de puissance d'émission dans le sens descendant, sans qu'il soit nécessaire que le RNC lui signale une autre valeur.

On notera en outre que le mode d'obtention de ladite valeur approchée de variation de valeur cible n'exclut pas que cette valeur puisse correspondre à la valeur exacte de variation de valeur cible. On notera en outre qu'une telle approximation n'exclut pas non plus le cas de valeur nulle pour la deuxième composante.

Ladite valeur cible utilisée par ledit algorithme de contrôle de puissance (ou algorithme de boucle interne) peut elle-même être ajustée par un algorithme d'ajustement (ou algorithme de boucle externe) en fonction de la qualité de service requise, et ladite variation de valeur cible est alors destinée, dans le cas de changement de qualité de service requise, à anticiper la variation correspondante de valeur cible ajustée par ledit algorithme d'ajustement.

Dans la description qui suit de la présente invention, on considère le cas de variation de valeur cible (ou de changement de qualité de service requise) correspondant à un changement de mode de transmission, du mode non compressé vers le mode compressé. Les mêmes principes s'appliqueraient pour un changement de mode de transmission, du mode compressé vers le mode non compressé.

On considère en outre, à titre d'exemple, le cas de transmission dans le sens descendant, à savoir de Node B vers UE.

On considère en outre, à titre d'exemple, le cas des canaux DPDCH et DPCCH tels que définis dans l'UMTS, la puissance d'émission de chacun des champs « TFCI », « TPC » et « Pilote » du canal DPCCH étant décalée par rapport à la puissance d'émission du ou des canaux DPDCH d'un décalage noté respectivement PO1, PO2, PO3.

Bien entendu, l'invention n'est pas limitée à ces exemples.

La variation de valeur cible, notée ΔSIR, peut être obtenue comme décrit dans la demande européenne n° 00400357.0 déposée le 8 Février 2000 par le demandeur.

On rappelle qu'une caractéristique d'un système tel que l'UMTS est la possibilité de transporter plusieurs services sur une même connexion, c'est-à-dire plusieurs canaux de transport sur un même canal physique. De tels canaux de transport (ou TrCH, pour "Transport Channels" en anglais) sont traités séparément selon un schéma de codage canal (incluant un codage détecteur d'erreurs, un codage correcteur d'erreurs, une adaptation de débit, et un entrelacement) avant d'être multiplexés temporellement pour former un canal de transport composite codé (ou CCTrCH, pour "Coded Composite Transport Channel" en anglais) à répartir sur un ou plusieurs canaux physiques. Le traitement selon ce schéma de codage canal s'effectue par intervalles de temps de transmission (ou TTI, pour "Transmission Time Interval" en anglais). Dans ce schéma de codage canal, l'adaptation de débit inclut les deux techniques de poinçonnage et répétition; en outre, un entrelacement inter-trame est effectué sur la longueur TTI, ou profondeur d'entrelacement. Chaque TTI est ensuite segmenté en trames, et le multiplexage en temps et la répartition sur les canaux physiques sont ensuite effectués trame par trame. En outre, chacun des différents canaux de transport TrCHi (i=1, ...n) qui sont multiplexés pour former un CCTrCH a sa propre longueur TTI, notée $TTI_i$. Plus d'informations sur ces aspects de l'UMTS peuvent être trouvés dans le document 3G TS25 212 V3.0.0 publié par le 3GPP.

Comme décrit dans la seconde demande de brevet antérieure précitée, la valeur ΔSIR peut être obtenue au moyen de l'expression:

$$\Delta SIR = \max (\Delta SIR1\_compression, \ldots , \Delta SIRn\_compression) + \Delta SIR\_coding$$

où "n" est le nombre de longueurs d'intervalles de temps de transmission TTI pour tous les canaux de transport TrCh d'un canal de transport composite codé CCTrCh, $F_i$ est la longueur en nombre de trames du i-ème TTI et où ΔSIR_coding vérifie:

- ΔSIR_coding= DeltaSIR pour les trames compressées
- ΔSIR_coding= DeltaSIRafter pour les trames de recouvrement
- ΔSIR_coding= 0 dans les autres cas

et ΔSIRi_compression est défini par :

- si les trames sont compressées par poinçonnage:

  - ΔSIRi_compression= 10 log $(N*F_i/ (N*F_i - TGL_i))$ s'il y a une interruption de transmission dans le TTI courant de longueur $F_i$ trames, où $TGL_i$ est la durée de l'interruption de transmission en nombre d'intervalles de temps (ou "Transmission Gap Length" en anglais) (soit d'une seule interruption de transmission, soit d'une somme de plusieurs interruptions de transmission) dans le TTI courant de longueur $F_i$ trames,
  - ΔSIRi_compression= 0 dans le cas contraire

- si les trames sont compressées par réduction du facteur d'étalement:

  - ΔSIRi_compression= 10 log $(R_{CF}/R)$ pour chaque trame compressée, où R est le débit net instantané avant et après la trame compressée et $R_{CF}$ est le débit net instantané pendant la trame compressée (étant entendu que le terme "débit net instantané" signifie que pour une trame compressée, la période utilisée pour calculer ce débit n'est pas la période entière de la trame mais seulement la fraction de cette période de trame où des données sont transmises); par exemple, dans le sens descendant, $10\log(R_{CF}/R)$ est égal à 3 dB pour l'UMTS, où l'adaptation de débit (ou "rate matching" en anglais) est la même pour les trames compressées et les trames non compressées, quand le mode compressé par réduction du facteur d'étalement par deux est utilisé. Dans le sens montant, ΔSIRi_compression est par contre égal à 10 log ((15-TGL)/15) parce que l'adaptation de débit n'est pas la même pour les trames compressées et les trames non compressées. En outre, dans le cas où on réduit simplement le débit d'information, de manière à ne pas avoir besoin de compresser les trames en modifiant le taux de répétition/poinçonnage et/ou le facteur d'étalement (cette méthode étant aussi dite, en anglais, de "higher layer scheduling"), le terme ΔSIRi_compression est égal à zéro.
  - ΔSIRi_compression= 0 dans les autres cas.

Dans cet alogorithme, max (ΔSIR1_compression, ... , ΔSIRn_compression) correspond à ladite première com-

posante, et $\Delta$SIR_coding correspond à ladite seconde composante, pour ladite variation de valeur cible.

Dans cet algorithme la seconde composante $\Delta$SIR_coding a des valeurs différentes pour les trames compressées et de recouvrement, respectivement DeltaSIR, et DeltaSIRafter.

D'autres algorithmes ou des variantes pourraient être envisagées, notamment, comme décrit également dans la seconde demande de brevet antérieure précitée :

- dans le cas particulier où une interruption de transmission commence dans une première trame et finit dans une seconde trame consécutive (ce cas correspondant à la méthode dite de double trame, ou « double-frame method » en anglais, dans l'UMTS), la seconde trame compressée (avec la deuxième partie de l'interruption de transmission) est considérée comme la trame de recouvrement ($\Delta$SIR_coding= DeltaSIRafter). Dans ce cas, la première trame qui suit les deux trames consécutives considérées n'est pas considérée comme une trame de recouvrement ($\Delta$SIR_coding= 0)
- de façon alternative, la seconde trame compressée pourrait être considérée comme une trame compressée ($\Delta$SIR_coding= DeltaSIR) et la première trame qui suit les deux trames consécutives considérées pourrait être considérée comme une trame de recouvrement ($\Delta$SIR_coding= DeltaSIRafter)
- suivant une autre alternative, la deuxième trame compressée pourrait être considérée comme une trame compressée et une trame de recouvrement ($\Delta$SIR_coding= DeltaSIR + DeltaSIRafter, ou toute autre combinaison), ou plus généralement, et pour réduire la quantité de signalisation nécessaire et la complexité, la composante $\Delta$SIR_coding pourrait être déterminée sur la base des valeurs DeltaSIR et DeltaSIRafter, sans qu'il soit nécessaire de signaler aucune autre valeur.

En considérant, à titre d'exemple, le cas du ou des canaux DPDCH et du champ « Pilote » du canal DPCCH, ou plus généralement le cas d'au moins un canal de données et un canal de contrôle, dont la puissance d'émission est contrôlée simultanément par un même algorithme de contrôle de puissance, et tels que le canal de contrôle a sa puissance d'émission décalée par rapport au canal de données,
selon l'invention :

- dans le cas de variation de ladite valeur cible, on applique à la puissance d'émission du canal de données et/ou à la puissance d'émission du canal de contrôle et/ou au décalage de la puissance d'émission du canal de contrôle par rapport à la puissance d'émission du canal de données, des variations anticipées permettant d'obtenir une variation anticipée de puissance d'émission du canal de données, qui corresponde à ladite valeur approchée de variation de valeur cible,
- avantageusement, lesdites variations anticipées de puissance d'émission du canal de données et/ou de puissance d'émission du canal de contrôle et/ou de décalage de la puissance d'émission du canal de contrôle par rapport au canal de données, peuvent en outre être déterminées de manière à avoir une même énergie du signal transmis dans le canal de contrôle, avant et après ladite variation de valeur cible, et sur une même période de référence.

On notera que le terme "canal de contrôle" est destiné à recouvrir aussi bien le cas d'un canal que le cas d'un champ dans le cas d'un canal de contrôle comportant plusieurs champs tels que tel que les champs "Pilote", "TPC", ou "TFCI" du canal DPCCH dans l'UMTS.

Si l'on note:

- $N_1$ le nombre de bits du signal pilote dans le dernier intervalle de temps (ou période de référence) avant le changement de SIR cible et $N_2$ le nombre de bits du signal pilote dans le premier intervalle de temps après le changement de SIR cible,
- $SF_1$ et $SF_2$ les facteurs d'étalement repectivement dans ces deux intervalles de temps (dans le cas de mode compressé réalisé par réduction du facteur d'étalement)
- $PO3_1$ et $PO3_2$ les valeurs prises par PO3 respectivement dans ces deux intervalles de temps (en dB)

$PO3_2$ peut par exemple être obtenu de la façon suivante:

$$PO3_2 = PO3_1 + 10\log\left(\frac{N_1 SF_1}{N_2 SF_2}\right) - \Delta SIR$$

Cette expression étant obtenue en écrivant :

$$N_1 \, SF_1 \, P_1 = N_2 \, SF_2 \, P_2$$

où $P_1$ et $P_2$ sont les puissances d'émission du signal pilote, respectivement dans les deux intervalles de temps considérés.

On notera que dans le cas de l'UMTS, pour le sens descendant, l'expression $10 \log\left(\dfrac{N_1 SF_1}{N_2 SF_2}\right)$ est égale à zéro.

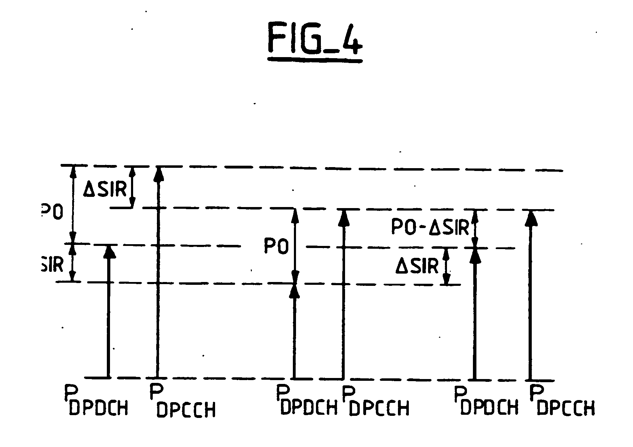

Comme illustré schématiquement sur la figure 4, deux méthodes peuvent par exemple être utilisées pour appliquer des variations anticipées de puissance d'émission aux canaux de données et de contrôle.

La figure 4 correspond plus particulièrement, à titre d'exemple, au cas où $10 \log\left(\dfrac{N_1 SF_1}{N_2 SF_2}\right)$ est égal à zéro.

Suivant une méthode illustrée dans la partie gauche de la figure 4, on augmente la puissance d'émission du canal de données, notée $P_{DPDCH}$, et la puissance d'émission du canal de contrôle, notée $P_{DPCCH}$, d'une valeur correspondant à ladite valeur approchée de variation de valeur cible, notée $\Delta SIR$.

Ainsi, dans cette méthode, on modifie la puissance d'émission du canal de contrôle, mais on ne modifie pas le décalage de la puissance d'émission du canal de contrôle par rapport à la puissance d'émission du canal de données.

Suivant une méthode illustrée dans la partie droite de la figure 4 , on réduit le décalage PO de la puissance d'émission du canal de contrôle par rapport au canal de données d'une valeur correspondant à ladite valeur approchée de variation de valeur cible, notée $\Delta SIR$.

Ainsi, dans cette méthode, on ne modifie pas la puissance d'émission du canal de contrôle, mais on modifie le décalage de la puissance d'émission du canal de contrôle par rapport à la puissance d'émission du canal de données.

La partie centrale de la figure 4 illustre le cas où il n'y a pas de variation de valeur cible.

La figure 4 devrait bien entendu être modifiée pour le cas où $10 \log\left(\dfrac{N_1 SF_1}{N_2 SF_2}\right)$ ne serait pas égal à zéro.

Pour les décalages PO1 et PO2 relatifs à la puissance d'émission des champs TFCI et TPC, respectivement, la même méthode que pour le décalage PO3 peut être utilisée.

La même variation que celle obtenue pour le décalage PO3 peut aussi être appliquée pour les décalages PO1 et PO2. Ceci a notamment pour avantage de ne pas changer les rapports PO1/PO3 et PO2/PO3, ce qui peut être utile par exemple quand PO1=PO2=PO3 car cela permet de conserver cette égalité après application desdites variations anticipées de puissance d'émission ou variations correspondantes de décalage de puissances d'émission.

Un exemple de procédé suivant l'invention peut être décrit par l'algorithme suivant.

Cet exemple correspond plus particulièrement à la deuxième méthode illustrée en relation avec la figure 4, et au cas où on applique la même variation pour les décalages PO1, PO2, PO3. Cet exemple correspond aussi plus particulièrement au cas de deux interruptions de transmission successives formant un même motif d'interruption de transmission (ou « transmission gap pattern » en anglais), les paramètres DeltaSIR et DeltaSIRafter pour ces deux interruptions de transmission étant notées respectivement DeltaSIR1, DeltaSIRafter1, et DeltaSIR2, DeltaSIRafter2.

Pendant les trames compressées et de recouvrement, les décalages de puissance PO1, PO2, PO3 sont réduits de:

$$\max\,(\Delta SIR1\_compression,\,\ldots\,,\,\Delta SIRn\_compression) + \Delta SIR\_coding$$

où "n" est le nombre de longueurs d'intervalles de temps de transmission TTI pour tous les canaux de transport TrCh d'un canal de transport composite codé CCTrCh, et où $\Delta SIR\_coding$ vérifie:

- $\Delta SIR\_coding$= DeltaSIR1 pour les trames compressées correspondant à la première interruption de transmission dudit motif
- $\Delta SIR\_coding$= DeltaSIRafter1 pour les trames de recouvrement correspondant à la première interruption de transmission dudit motif
- $\Delta SIR\_coding$= DeltaSIR2 pour les trames compressées correspondant à la deuxième interruption de transmission dudit motif
- $\Delta SIR\_coding$= DeltaSIRafter2 pour les trames de recouvrement correspondant à la deuxième interruption de trans-

mission dudit motif

et $\Delta$SIRi_compression est défini par :

- si les trames sont compressées par réduction du facteur d'étalement par un facteur 2:

  - $\Delta$SIRi_compression= 3 dB pour les trames compressées
  - $\Delta$SIRi_compression= 0dB dans les autres cas.

- si les trames sont compressées par poinçonnage:

  - $\Delta$SIRi_compression= 10 log (15*$F_i$/ (15'$F_i$ - $TGL_i$)) s'il y a une interruption de transmission dans le TTI courant de longueur $F_i$ trames, où $TGL_i$ est la durée de l'interruption de transmission en nombre d'intervalles de temps (ou "Transmission Gap Length" en anglais) (soit d'une seule interruption de transmission, soit d'une somme de plusieurs interruptions de transmission) dans le TTI courant de longueur $F_i$ trames,
  - $\Delta$SIRi_compression= 0 dans le cas contraire

- si les trames sont compressées selon la méthode dite en anglais de "higher layer scheduling":

  - $\Delta$SIRi_compression= 0 dB pour les trames compressées et de recouvrement.

Dans le cas particulier de la méthode dite de double trame, la seconde trame compressée (avec la seconde partie de l'interruption de transmission) peut être considérée comme la trame de recouvrement ($\Delta$SIR_coding= DeltaSIRafter1 ou $\Delta$SIR_coding= DeltaSIRafter2). Donc dans ce cas, la première trame qui suit les deux trames compressées consécutives n'est pas considérée comme une trame de recouvrement ( les décalages de puissance PO1, PO2, PO3, ont les mêmes valeurs que dans le mode normal).

D'une manière générale, lesdites variations anticipées de puissance d'émission et/ou variations anticipées de décalage de puissance d'émission doivent être appliquées avant de transmettre le premier intervalle de temps qui sera reçu après application de la variation de valeur cible $\Delta$SIR, ou dès que possible ensuite.

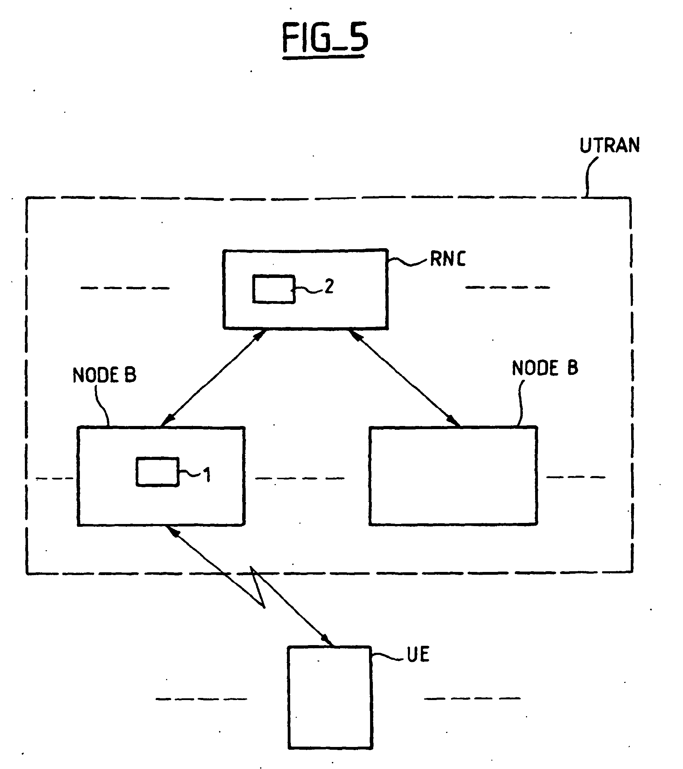

La figure 5 est un schéma destiné à illustrer un exemple de moyens à prévoir, dans un système de radiocommunications mobiles, pour mettre en oeuvre un procédé suivant l'invention, pour le contrôle de puissance dans le sens descendant.

Ainsi, pour le sens descendant, et à titre d'exemple uniquement, on pourra prévoir, comme illustré schématiquement sur cette figure:

- dans un Node B, des moyens notés 1 pour, dans le cas de variation de valeur cible dans le sens descendant (déterminée dans l'UE, par exemple suivant l'algorithme rappelé dans ce qui précède), appliquer une variation anticipée de décalage de puissance d'émission, déterminée par exemple suivant l'algorithme décrit ci-dessus,
- dans un RNC, des moyens notés 2 pour signaler à un Node B (considéré comme émetteur pour le sens descendant), des paramètres DeltaSIR et DeltaSIRafter pour le sens montant permettant à ce Node B de déterminer une valeur approchée de variation de valeur cible pour le sens descendant, et donc une variation anticipée de décalage de puissance d'émission , pour la boucle interne de contrôle de puissance dans le sens descendant. Ces moyens de signalisation peuvent donc être les mêmes que ceux déjà prévus pour signaler au Node B (considéré comme récepteur pour le sens montant) les mêmes paramètres, nécessaires pour permettre à ce Node B de déterminer la variation de valeur cible à appliquer pour la boucle externe de contrôle de puissance dans le sens montant.

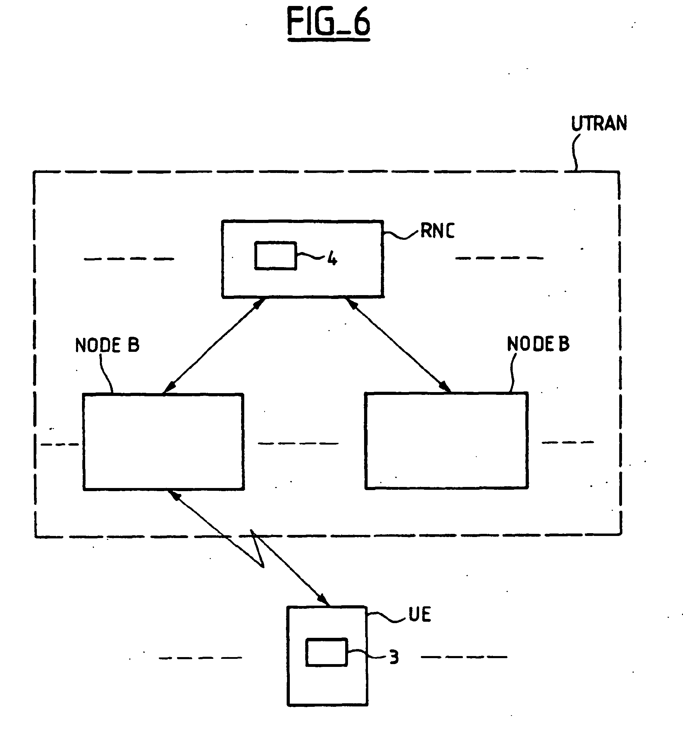

La figure 6 est un schéma destiné à illustrer un exemple de moyens à prévoir, dans un système de radiocommunications mobiles, pour mettre en oeuvre un procédé suivant l'invention, pour le contrôle de puissance dans le sens montant.

Ainsi, pour le sens montant, on pourra prévoir, à titre d'exemple seulement, et comme illustré schématiquement sur cette figure :

- dans un UE, des moyens notés 3 pour, dans le cas de variation de valeur cible dans le sens montant (déterminée dans le Node B, par exemple suivant l'algorithme rappelé dans ce qui précède), appliquer une variation anticipée de décalage de puissance d'émission, déterminée par exemple suivant l'algorithme décrit ci-dessus,
- dans le réseau, par exemple dans le RNC, des moyens notés 4 pour signaler à un UE (considéré comme émetteur pour le sens montant), des paramètres DeltaSIR et DeltaSIRafter pour le sens descendant, permettant à cet UE de déterminer une valeur approchée de variation de valeur cible pour le sens montant, et donc une variation anticipée de décalage de puissance d'émission , pour la boucle interne de contrôle de puissance dans le sens montant. Ces moyens de signalisation peuvent donc être les mêmes que ceux déjà prévus pour signaler à l'UE (considéré comme récepteur pour le sens descendant) les mêmes paramètres, nécessaires pour permettre à l'UE de déterminer la variation de valeur cible à appliquer pour la boucle externe de contrôle de puissance dans le sens descendant.

L'exemple décrit en relation avce les figures 5 et 6 correspond ainsi plus particulièrement au cas où, pour un sens de transmission donné, une valeur approchée de ladite deuxième composante est obtenue au moyen de ladite deuxième composante pour le sens de transmission opposé. D'autres exemples sont bien entendu possibles.

On peut en outre prévoir que les paramètres DeltaSIR et DeltaSIRafter, qui sont signalés par le RNC au Node B et à l'UE soient les mêmes pour le Node B et pour l'UE. Ceci permet en outre de s'assurer que la variation anticipée de puissance d'émission est bien la même que la variation de valeur cible, pour chaque sens de transmission.

En outre, d'autres exemples seraient possibles, sans sortir du cadre de la présente invention. Notamment, dans un système tel que le système UMTS, un Node B peut ne pas communiquer directement avec un RNC dit RNC serveur (ou SRNC, pour "Serving RNC" en anglais), dans lequel est mise en oeuvre la boucle externe de contrôle de puissance, mais par l'intermédiaire d'un autre RNC (ou DRNC, pour "Drift RNC" en anglais). Par conséquent la présente invention ne concerne pas seulement l'interface entre RNC et Node B, mais aussi l'interface entre des RNC, ces interfaces étant appelées respectivement "Iub" et "Iur" dans le système UMTS.

**Revendications**

1. Procédé pour le contrôle de puissance d'émission dans un système de radiocommunications mobiles, dans lequel un algorithme de contrôle de puissance contrôle la puissance d'émission en fonction d'une valeur cible de qualité de transmission, ce procédé étant **caractérisé en ce que**:

   - une variation de valeur cible est appliquée pour compenser les effets d'un mode de transmission dit compressé, dans lequel la transmission est interrompue pendant des interruptions de transmission, et le débit est augmenté de manière correspondante pour compenser les interruptions de transmission,
   - ladite variation de valeur cible comporte une première composante, destinée à compenser les effets de ladite augmentation de débit, et une seconde composante, destinée à compenser les autres effets des interruptions de transmission,
   - une variation anticipée de puissance d'émission est appliquée en correspondance,
   - ladite variation anticipée de puissance d'émission correspond à une valeur approchée de ladite variation de valeur cible, obtenue par approximation de ladite deuxième composante .

2. Procédé selon la revendication 1, **caractérisé en ce que**, pour un sens de transmission donné, une valeur approchée de ladite deuxième composante est obtenue au moyen de ladite deuxième composante pour le sens de transmission opposé.

3. Procédé selon l'une des revendications 1 et 2, **caractérisé en ce que**:

   - ledit algorithme de contrôle de puissance contrôle simultanément la puissance d'émission d'au moins deux canaux, dont un canal de données et un canal de contrôle, en fonction d'une valeur cible de qualité de transmission,
   - ledit canal de contrôle a sa puissance d'émission décalée par rapport audit canal de données,
   - dans le cas de variation de ladite valeur cible, on applique à la puissance d'émission du canal de données et/ou à la puissance d'émission du canal de contrôle et/ou au décalage de la puissance d'émission du canal de contrôle par rapport à la puissance d'émission du canal de données, des variations anticipées permettant d'obtenir une variation anticipée de puissance d'émission du canal de données, qui corresponde à ladite valeur approchée de variation de valeur cible .

4. Procédé selon la revendication 3, **caractérisé en ce que**, dans le cas de variation de valeur cible, lesdites variations anticipées de puissance d'émission du canal de données et/ou de puissance d'émission du canal de contrôle et/ou de décalage de la puissance d'émission du canal de contrôle par rapport au canal de données, sont déterminées de manière à avoir une même énergie du signal transmis dans le canal de contrôle, avant et après ladite variation de valeur cible, et sur une même période de référence.

5. Procédé selon l'une des revendications 3 et 4, **caractérisé en ce que**, dans le cas de variation de valeur cible, on applique au décalage de la puissance d'émission du canal de contrôle par rapport à la puissance d'émission du canal de données une variation anticipée correspondant à l'opposé de ladite valeur approchée de variation de valeur cible.

6. Procédé selon l'une des revendications 3 et 4, **caractérisé en ce que**, dans le cas de variation de valeur cible, on applique à la puissance d'émission du canal de données et à la puissance du canal de contrôle une variation anticipée correspondant à ladite variation approchée de valeur cible.

7. Procédé selon l'une des revendications 1 à 6, **caractérisé en ce que** ladite valeur cible est elle-même ajustée par un algorithme d'ajustement en fonction de la qualité de service requise, et ladite variation de valeur cible est destinée, dans le cas de changement de qualité de service requise, à anticiper la variation correspondante de valeur cible ajustée par ledit algorithme d'ajustement.

8. Système de radiocommunications mobiles, **caractérisé en ce qu'**il comporte des moyens pour la mise en oeuvre d'un procédé suivant l'une des revendications 1 et 2, et :

   - des moyens pour, dans le cas de variation de valeur cible, appliquer une variation anticipée de puissance d'émission, correspondant à ladite variation approchée de valeur cible.

9. Système de radiocommunications mobiles, **caractérisé en ce qu'**il comporte des moyens pour la mise en oeuvre d'un procédé suivant l'une des revendications 3 à 6, et

   - des moyens pour, dans le cas de variation de ladite valeur cible, appliquer à la puissance d'émission du canal de données et/ou à la puissance d'émission du canal de contrôle et/ou au décalage de la puissance d'émission du canal de contrôle par rapport à la puissance d'émission du canal de données, des variations anticipées permettant d'obtenir une variation anticipée de puissance d'émission du canal de données, qui corresponde à ladite valeur approchée de variation de valeur cible.

10. Système selon la revendication 9, **caractérisé en ce qu'**il comporte en outre:

   - des moyens pour faire en sorte que, dans le cas de variation de valeur cible, lesdites variations anticipées de puissance d'émission du canal de données et/ou de puissance d'émission du canal de contrôle et/ou de décalage de la puissance d'émission du canal de contrôle par rapport au canal de données, permettent d'avoir une même énergie du signal transmis dans le canal de contrôle, avant et après ladite variation de valeur cible, et sur une même période de référence.

11. Système selon l'une des revendications 8 à 10, **caractérisé en ce qu'**il comporte:

   - des moyens pour, dans le cas de variation de valeur cible, appliquer au décalage de la puissance d'émission du canal de contrôle par rapport à la puissance d'émission du canal de données une variation anticipée correspondant à l'opposé de ladite valeur approchée de variation de valeur cible.

12. Système selon l'une des revendications 8 à 10, **caractérisé en ce qu'**il comporte:

   - des moyens pour, dans le cas de variation de valeur cible, appliquer à la puissance d'émission dudit canal de données et dudit canal de contrôle une variation anticipée correspondant à ladite valeur approchée de variation de valeur cible.

13. Station de base, comportant des moyens pour mettre, en oeuvre un algorithme de contrôle de puissance pour contrôler la puissance d'émission dans le sens descendant en fonction d'une valeur cible de qualité de transmisson, **caractérisée en ce qu'**elle comporte:

   - des moyens pour, dans le cas de variation de valeur cible, ladite variation de valeur cible étant appliquée pour compenser les effets d'un mode de transmission dit compressé dans lequel la transmission est interrompue pendant des interruptions de transmission et le débit est augmenté de manière correspondante pour compenser les interruptions de transmission, et ladite variation de valeur cible comportant une première composante destinée à compenser les effets de ladite augmentation de débit et une seconde composante, destinée à compenser les autres effets des interruptions de transmission, appliquer une variation anticipée de puissance d'émission en correspondance, ladite variation anticipée de puissance d'émission correspondant à une valeur approchée de variation de valeur cible, obtenue par approximation de ladite seconde composante.

**14.** Station de base selon la revendication 13, **caractérisée en ce que**, ledit algorithme de contrôle de puissance contrôlant simultanément la puissance d'émission d'au moins deux canaux, dont un canal de données et un canal de contrôle, en fonction d'une valeur cible de qualité de transmission, et ledit canal de contrôle ayant sa puissance d'émission décalée par rapport audit canal de données, elle comporte pour le contrôle de puissance dans le sens descendant:

- des moyens pour, dans le cas de variation de ladite valeur cible, appliquer à la puissance d'émission du canal de données et/ou à la puissance d'émission du canal de contrôle et/ou au décalage de la puissance d'émission du canal de contrôle par rapport à la puissance d'émission du canal de données, des variations anticipées permettant d'obtenir une variation anticipée de puissance d'émission du canal de données, qui corresponde à ladite valeur approchée de variation de valeur cible.

**15.** Station de base selon la revendication 14, **caractérisée en ce qu'**elle comporte en outre:

- des moyens pour faire en sorte que, dans le cas de variation de valeur cible, lesdites variations anticipées de puissance d'émission du canal de données et/ou de puissance d'émission du canal de contrôle et/ou de décalage de la puissance d'émission du canal de contrôle par rapport au canal de données, permettent d'avoir une même énergie du signal transmis dans le canal de contrôle, avant et après ladite variation de valeur cible, et sur une même période de référence.

**16.** Station de base selon l'une des revendications 13 à 15, **caractérisée en ce qu'**elle comporte:

des moyens pour appliquer au décalage de la puissance d'émission du canal de contrôle par rapport à la puissance d'émission du canal de données une variation anticipée correspondant à l'opposé de ladite valeur approchée de variation de valeur cible.

**17.** Station de base selon l'une des revendications 13 à 15, **caractérisée en ce qu'**elle comporte:

- des moyens pour appliquer à la puissance d'émission dudit canal de données et à la puissance d'émission dudit canal de contrôle une variation anticipée correspondant à ladite valeur approchée de variation de valeur cible.

**18.** Station de base selon l'une des revendications 13 à 17, **caractérisée en ce qu'**elle comporte:

- des moyens pour utiliser ladite seconde composante qui lui est signalée par un contrôleur de stations de base pour le contrôle de puissance dans le sens montant, pour déterminer ladite valeur approchée de variation de valeur cible pour le sens descendant.

**19.** Station mobile, comportant des moyens pour mettre en oeuvre un algorithme de contrôle de puissance pour contrôler la puissance d'émission dans le sens montant en fonction d'une valeur cible de qualité de transmission, **caractérisée en ce qu'**elle comporte:

- des moyens pour, dans le cas de variation de valeur cible, ladite variation de valeur cible étant appliquée pour compenser les effets d'un mode de transmission dit compressé dans lequel la transmission est interrompue pendant des interruptions de transmission et le débit est augmenté de manière correspondante pour compenser les interruptions de transmission, et ladite variation de valeur cible comportant une première composante destinée à compenser les effets de Ladite augmentation de débit est une seconde composante, destinée à compenser les autres effets des interruptions de transmission, appliquer une variation anticipée de puissance d'émission en correspondance, ladite variation anticipée de puissance d'émission correspondant à une valeur approchée de variation de valeur cible, obtenue par approximation de ladite seconde composante.

**20.** Station mobile selon la revendication 19, **caractérisée en ce que**, ledit algorithme de contrôle de puissance contrôlant simultanément la puissance d'émission d'au moins deux canaux, dont un canal de données et un canal de contrôle, en fonction d'une valeur cible de qualité de transmission, et ledit canal de contrôle ayant sa puissance d'émission décalée par rapport audit canal de données, elle comporte, pour le contrôle de puissance dans le sens montant:

- des moyens pour, dans le cas de variation de ladite valeur cible, appliquer à la puissance d'émission du canal de données et/ou à la puissance d'émission du canal de contrôle et/ou au décalage de la puissance d'émission du canal de contrôle par rapport à la puissance d'émission du canal de données, des variations anticipées permettant d'obtenir une variation anticipée de puissance d'émission du canal de données, qui corresponde à ladite valeur approchée de variation de valeur cible.

**21.** Station mobile selon la revendication 20, **caractérisée en ce qu'**elle comporte en outre:

- des moyens pour faire en sorte que, dans le cas de variation de valeur cible, lesdites variations anticipées de puissance d'émission du canal de données et/ou de puissance d'émission du canal de contrôle et/ou de décalage de la puissance d'émission du canal de contrôle par rapport au canal de données, permettent d'avoir une même énergie du signal transmis dans le canal de contrôle, avant et après ladite variation de valeur cible, et sur une même période de référence.

**22.** Station mobile selon l'une des revendications 20 et 21, **caractérisée en ce qu'**elle comporte:

- des moyens pour appliquer au décalage de la puissance d'émission du canal de contrôle par rapport à la puissance d'émission du canal de données une variation anticipée correspondant à l'opposé de ladite valeur approchée de variation de valeur cible.

**23.** Station mobile selon l'une des revendications 20 et 31, **caractérisée en ce qu'**elle comporte:

- des moyens pour appliquer à la puissance d'émission dudit canal de données et à la puissance d'émission dudit canal de contrôle une variation anticipée correspondant à ladite valeur approchée de variation de valeur cible.

**24.** Station mobile selon l'une des revendications 19 à 23, **caractérisée en ce qu'**elle comporte:

- des moyens pour utiliser ladite seconde composante qui lui est signalée par un contrôleur de stations de base pour le contrôle de puissance dans le sens descendant, pour déterminer ladite valeur approchée de variation de valeur cible pour le sens montant.

**25.** Contrôleur de stations de base, comportant des moyens pour signaler, respectivement à une station de base et une station mobile, une composante dite seconde composante d'une variation de valeur cible de qualité de transmission, pour un algorithme de contrôle de puissance contrôlant la puissance d'émission, respectivement dans le sens montant et dans le sens descendant, en fonction de ladite valeur cible de qualité de transmission, ladite variation de valeur cible étant appliquée pour compenser les effets d'un mode de transmission dit compressé dans lequel la transmission est interrompue pendant des interruptions de transmission et le débit est augmenté de manière correspondante pour compenser les interruptions de transmission, et ladite variation de valeur cible comportant une première composante destinée à compenser les effets de ladite augmentation de débit et ladite seconde composante destinée à compenser les autres effets des interruptions de transmission, **caractérisé en ce que**, une variation anticipée de puissance d'émission étant appliquée en correspondance d'une variation de valeur cible, et ladite variation anticipée de puissance d'émission correspondant à une valeur approchée de variation de valeur cible, obtenue par approximation de ladite seconde composante, ledit contrôler de stations de base comporte:

- des moyens pour signaler à une station de base et à une station mobile une même valeur pour ladite seconde composante, pour les deux sens de transmission.

**Claims**

**1.** A method of controlling transmission power in a mobile radio system in which a power control algorithm controls transmission power as a function of a transmission quality target value, the method being **characterized in that**:

- a target value variation is applied to compensate the effects of a compressed transmission mode in which transmission is interrupted during transmission gaps and the bit rate is increased correspondingly to compensate the transmission gaps,
- said target value variation includes a first component for compensating the effects of said increase in bit rate and a second component for compensating other effects of transmission gaps,
- a corresponding anticipated variation of the transmission power is applied, and
- said anticipated variation of the transmission power corresponds to an approximate value of said target value variation obtained by approximating said second component.

2. A method according to claim 1, **characterized in that** an approximate value of said second component for a given transmission direction is obtained from the second component for the opposite transmission direction.

3. A method according to either claim 1 or claim 2, **characterized in that**:

- said power control algorithm simultaneously controls the transmission power of at least two channels, including a data channel and a control channel, as a function of a transmission quality target value,
- the transmission power of said control channel is offset relative to the transmission power of said data channel, and
- in the event of target value variation, anticipated variations of the transmission power of the data channel and/or the transmission power of the control channel and/or the offset of the transmission power of the control channel relative to the transmission power of the data channel are applied in order to obtain an anticipated variation of the transmission power of the data channel that corresponds to said approximate value of the target value variation.

4. A method according to claim 3, **characterized in that**, in the event of target value variation, said anticipated variations of the transmission power of the data channel and/or of the transmission power of the control channel and/or of the offset of transmission power of the control channel relative to the transmission power of the data channel are determined so that the power of the signal transmitted on the control channel is the same before and after said target value variation and over the same reference period.

5. A method according to either claim 3 or claim 4, **characterized in that**, in the event of target value variation, an anticipated variation of the offset of the transmission power of the control channel relative to the transmission power of the data channel is applied that corresponds to the opposite of said approximate value of the target value variation.

6. A method according to either claim 3 or claim 4, **characterized in that**, in the event of target value variation, an anticipated variation of the transmission power of the data channel and the transmission power of the control channel is applied that corresponds to said approximate value of the target value variation.

7. A method according to any one of claims 1 to 6, **characterized in that** said target value is adjusted by an adjustment algorithm as a function of a required quality of service and said target value variation is intended, in the event of a change to the required quality of service, to anticipate the corresponding target value variation adjusted by said adjustment algorithm.

8. A mobile radio system **characterized in that** it includes, for implementing a method according to claim 1 or claim 2, means for applying, in the event of target value variation, an anticipated variation of the transmission power that corresponds to said approximate value of the target value variation.

9. A mobile radio system **characterized in that** it includes, for implementing a method according to any one of claims 3 to 6, means for applying, in the event of target value variation, anticipated variations of the transmission power of the data channel and/or the transmission power of the control channel and/or the offset of the transmission power of the control channel relative to the transmission power of data channel to obtain an anticipated variation of the transmission power of the data channel that corresponds to said approximate value of the target value variation.

10. A system according to claim 9, **characterized in that** it further includes means such that, in the event of target value variation, said anticipated variations of the transmission power of the data channel and/or the transmission power of the control channel and/or the offset of the transmission power of the control channel relative to the transmission power of the data channel cause the signal transmitted on the control channel to have the same power before and after said target value variation and over the same reference period.

11. A system according to any one of claims 8 to 10, **characterized in that** it includes means for applying, in the event of target value variation, an anticipated variation of the offset of the transmission power of the control channel relative to the transmission power of the data channel that corresponds to the opposite of said approximate value of the target value variation.

12. A system according to any one of claims 8 to 10, **characterized in that** it includes means for applying, in the event of target value variation, an anticipated variation of the transmission power of said data channel and the transmission power of said control channel that corresponds to said approximate value of the target value variation.

13. A base station, including means for implementing a downlink power control algorithm to control the transmission power as a function of a transmission quality target value, **characterized in that** it includes:

   - means for acting, in the event of target value variation, said target value variation being applied to compensate the effects of a said compressed transmission mode in which transmission is interrupted during transmission gaps and the bit rate is increased correspondingly to compensate the transmission gaps, and said target value variation including a first component for compensating the effects of said increase in bit rate and a second component for compensating other effects of transmission gaps, to apply a corresponding anticipated variation of the transmission power, said variation of the transmission power corresponding to an approximate value of the target value variation, obtained by approximating said second component.

14. A base station according to claim 13, **characterized in that** for said power control algorithm simultaneously controlling the transmission power of at least two channel including a data channel and a control channel, as a function of a transmission quality target value, and the transmission power of said control channel being offset relative to the transmission power of said data channel, the base station includes for downlink power control :

   - means for applying, in the event of target value variation, anticipated variations of the transmission power of the data channel and/or the transmission power of the control channel and/or the offset of the transmission power of the control channel relative to the transmission power of the data channel, to obtain an anticipated variation of the transmission power of the data channel that corresponds to said approximate value of the target value variation.

15. A base station according to claim 14, **characterized in that** it further includes means such that, in the event of target value variation, said anticipated variations of the transmission power of the data channel and/or the transmission power of the control channel and/or the offset of the transmission power of the control channel relative to the transmission power of the data channel cause the signal transmitted on the control channel to have the same power before and after said target value variation and over the same reference period.

16. A base station according to any one of claims 13 to 15, **characterized in that** it includes means for applying an anticipated variation of the offset of the transmission power of the control channel relative to the transmission power of the data channel that corresponds to the opposite of said approximate value of the target value variation.

17. A base station according to any one of claims 13 to 15, **characterized in that** it includes means for applying an anticipated variation of the transmission power of said data channel and the transmission power of said control channel that corresponds to said approximate value of the target value variation.

18. A base station according to any one of claims 13 to 17, **characterized in that** it includes means for using said second component which is signaled to it by a base station controller for the purposes of uplink power control to determine said approximate value of the downlink target value variation.

19. A mobile station, including means for implementing an uplink power control algorithm to control the transmission power as a function of a transmission quality target value, **characterized in that** it includes:

   - means for acting, in the event of target value variation, said target value variation being applied to compensate the effects of a said compressed transmission mode in which transmission is interrupted during transmission gaps and the bit rate is increased correspondingly to compensate the transmission gaps, and said target value variation including a first component for compensating the effects of said increase in bit rate and a second component for compensating other effects of transmission gaps, to apply a corresponding anticipated variation of the transmission power, said variation of the transmission power corresponding to an approximate value of the target value variation, obtained by approximating said second component.

**20.** A mobile station, according to claim 19, **characterized in that** for said power control algorithm simultaneously controlling the transmission power of at least two channels, including a data channel and a control channel, as a function of a transmission quality target value, and the transmission power of said control channel being offset relative to the transmission power of said data channel, the mobile station includes for uplink power control:

- means for applying, in the event of target value variation, anticipated variations of the transmission power of the data channel and/or the transmission power of the control channel and/or the offset of the transmission power of the control channel relative to the transmission power of the data channel, to obtain an anticipated variation of the data channel transmission power that corresponds to said approximate value of the target value variation.

**21.** A mobile station according to claim 20, **characterized in that** it further includes means such that in the event of target value variation said anticipated variations of the transmission power of the data channel and/or the transmission power of the control channel and/or the offset of the transmission power of the control channel relative to the transmission power of the data channel cause the signal transmitted on the control channel to have the same power before and after said target variation and over the same reference period.

**22.** A mobile station according to claim 20 or claim 21, **characterized in that** it further includes means for applying an anticipated variation of the offset of the transmission power of the control channel relative to the transmission power of the data channel that corresponds to the opposite of said approximate value of the target value variation.

**23.** A mobile station according to claim 20 or claim 21, **characterized in that** it further includes means for applying an anticipated variation of the transmission power of said data channel and the transmission power of said control channel that corresponds to said approximate value of the target value variation.

**24.** A mobile station according to any one of claims 19 to 23, **characterized in that** it further includes means for using said second component which is signaled to it by a base station controller for the purposes of uplink power control to determine said approximate value of the downlink target value variation.

**25.** A base station controller including means for signaling, respectively to a base station and a mobile station, a second component of a variation in transmission quality target value for a power control algorithm controlling transmission power, respectively in the uplink direction and in the downlink direction, as a function of said transmission quality target value, said target value variation being applied to compensate the effects of a compressed transmission mode in which transmission is interrupted during transmission gaps and the bit rate is increased correspondingly to compensate the transmission gaps, and said target value variation including a first component for compensating the effects of said increase in bit rate and a second component for compensating other effects of transmission gaps, the base station controller being **characterized in that**, for an anticipated variation of the transmission power being applied corresponding to a target value variation, and said anticipated transmission power variation corresponding to an approximate value of said target value variation obtained by approximating said second component, said base station controller includes,

- means for signaling the same value for said second component for both transmission directions to a base station and to a mobile station.

**Patentansprüche**

**1.** Verfahren zur Sendeleistungssteuerung in einem Mobilfunkkommunikationssystem, in dem ein Leistungssteuerungsalgorithmus die Sendeleistung in Abhängigkeit von einem Zielwert der Übertragungsqualität steuert, wobei dieses Verfahren **dadurch gekennzeichnet ist, dass**:

- eine Änderung des Zielwertes angewendet wird, um die Auswirkungen eines so genannten komprimierten Übertragungsmodus zu kompensieren, bei dem die Übertragung während Übertragungsunterbrechungen unterbrochen wird und bei dem die Übertragungsrate in entsprechender Weise erhöht wird, um die Übertragungsunterbrechungen zu kompensieren;
- die Änderung des Zielwertes eine erste Komponente umfasst, die dazu bestimmt ist, die Auswirkungen der Übertragungsratenerhöhung zu kompensieren, und eine zweite Komponente, die dazu bestimmt ist, die anderen Auswirkungen der Übertragungsunterbrechungen zu kompensieren;

- eine vorweggenommene Sendeleistungsänderung in entsprechender Weise angewendet wird;
- die vorweggenommene Sendeleistungsänderung einem Näherungswert der Zielwertänderung entspricht, der durch eine Näherungslösung der zweiten Komponente ermittelt wird.

2. Verfahren nach Anspruch 1, **dadurch gekennzeichnet, dass** für eine gegebene Übertragungsrichtung ein Näherungswert der zweiten Komponente mittels der zweiten Komponente für die entgegengesetzte Übertragungsnchtung ermittelt wird.

3. Verfahren nach einem der Ansprüche 1 und 2, **dadurch gekennzeichnet, dass**:

   - der Leistungssteuerungsalgorithmus gleichzeitig die Sendeleistung von mindestens zwei Kanälen steuert, darunter ein Datenkanal und ein Steuerkanal, und zwar in Abhängigkeit von einem Zielwert der Übertragungsqualität;
   - die Sendeleistung des Steuerkanals gegenüber dem Datenkanal versetzt ist;
   - im Fall einer Änderung des Zielwertes auf die Sendeleistung des Datenkanals und/oder auf die Sendeleistung des Steuerkanals und/oder auf den Offset der Sendeleistung des Steuerkanals gegenüber der Sendeleistung des Datenkanals vorweggenommene Änderungen angewendet werden, mit deren Hilfe eine vorweggenommene Sendeleistungsänderung des Datenkanals erzielt werden kann, die dem Näherungsert der Zielwertänderung entspricht.

4. Verfahren nach Anspruch 3, **dadurch gekennzeichnet, dass** im Fall der Änderung des Zielwertes die vorweggenommenen Änderungen der Sendeleistung des Datenkanals und/oder der Sendeleistung des Steuerkanals und/oder des Offsets der Sendeleistung des Steuerkanals gegenüber dem Datenkanal so bestimmt werden, dass vor und nach der Änderung des Zielwertes sowie über dieselbe Referenzperiode jeweils dieselbe Energie des im Steuerkanal übertragenen Signals vorhanden ist.

5. Verfahren nach einem der Ansprüche 3 und 4, **dadurch gekennzeichnet, dass** im Fall der Änderung des Zielwertes auf den Offset der Sendeleistung des Steuerkanals gegenüber der Sendeleistung des Datenkanals eine vorweggenommene Änderung angewendet wird, die dem Gegenteil des Näherungswertes der Zielwertänderung entspricht.

6. Verfahren nach einem der Ansprüche 3 und 4, **dadurch gekennzeichnet, dass** im Fall der Änderung des Zielwertes auf die Sendeleistung des Datenkanals und auf die Leistung des Steuerkanals eine vorweggenommene Änderung angewendet wird, die der näherungsweise ermittelten Änderung des Zielwertes entspricht.

7. Verfahren nach einem der Ansprüche 1 bis 6, **dadurch gekennzeichnet, dass** der Zielwert selbst durch einen Abgleichalgorithmus in Abhängigkeit von der geforderten Dienstgüte abgeglichen wird und dass die Änderung des Zielwertes im Fall der Änderung der geforderten Dienstgüte dazu bestimmt ist, die entsprechende Änderung des durch den Abgleichalgorithmus abgeglichenen Zielwertes vorwegzunehmen.

8. Mobilfunkkommunikationssystem, **dadurch gekennzeichnet, dass** es zur Implementierung eines Verfahrens nach einem der Ansprüche 1 und 2 umfasst:

   - Mittel um im Fall der Änderung des Zielwertes eine vorweggenommene Sendeleistungsänderung anzuwenden, die der näherungsweise ermittelten Änderung des Zielwertes entspricht.

9. Mobilfunkkommunikationssystem, **dadurch gekennzeichnet, dass** es zur Implementierung eines Verfahrens nach einem der Ansprüche 3 bis 6 umfasst:

   - Mittel, um im Fall der Änderung des Zielwertes auf die Sendeleistung des Datenkanals und/oder auf die Sendeleistung des Steuerkanals und/oder auf den Offset der Sendeleistung des Steuerkanals gegenüber der Sendeleistung des Datenkanals vorweggenommene Änderungen anzuwenden, mit deren Hilfe eine vorweggenommene Sendeleistungsänderung des Datenkanals erzielt werden kann, die dem Näherungswert der Zielwertänderung entspricht.

10. System nach Anspruch 9, **dadurch gekennzeichnet, dass** es außerdem umfasst:

    - Mittel, um zu bewirken, dass im Fall der Änderung des Zielwertes die vorweggenommenen Änderungen der Sendeleistung des Datenkanals und/oder der Sendeleistung des Steuerkanals und/oder des Offsets der Sendeleistung des Steuerkanals gegenüber dem Datenkanal die Möglichkeit bieten, dass vor und nach der Änderung des Zielwertes sowie über dieselbe Referenzperiode jeweils dieselbe Energie des im Steuerkanal übertragenen Signals vorhanden ist.

**11.** System nach einem der Ansprüche 8 bis 10, **dadurch gekennzeichnet, dass** es umfasst:

- Mittel, um im Fall der Änderung des Zielwertes auf den Offset der Sendeleistung des Steuerkanals gegenüber der Sendeleistung des Datenkanals eine vorweggenommene Änderung anzuwenden, die dem Gegenteil des Näherungswertes der Zielwertänderung entspricht.

**12.** System nach einem der Ansprüche 8 bis 10, **dadurch gekennzeichnet, dass** es umfasst:

- Mittel, um im Fall der Änderung des Zielwertes auf die Sendeleistung des Datenkanals und des Steuerkanals eine vorweggenommene Änderung anzuwenden, die dem Näherungswert der Zielwertänderungentspricht.

**13.** Basisstation, umfassend Mittel zur Implementierung eines Leistungssteuerungsalgorithmus, um die Sendeleistung in Downlink-Richtung in Abhängigkeit von einem Zielwert der Übertragungsqualität zu steuern, **dadurch gekennzeichnet, dass** sie umfasst:

- Mittel, um im Fall der Änderung des Zielwertes - wobei diese Änderung des Zielwertes angewendet wird, um die Auswirkungen eines so genannten komprimierten Übertragungsmodus zu kompensieren, bei dem die Übertragung während Übertragungsunterbrechungen unterbrochen wird und bei dem die Übertragungsrate in entsprechender Weise erhöht wird, um die Übertragungsunterbrechungen zu kompensieren, und wobei die Änderung des Zielwertes eine erste Komponente umfasst, die zur Kompensierung der Auswirkungen dieser Übertragungsratenerhöhung bestimmt ist, und eine zweite Komponente, die zur Kompensierung der anderen Auswirkungen der Übertragungsunterbrechungen bestimmt ist, - eine vorweggenommene Sendeleistungsänderung in entsprechender Weise anzuwenden, wobei die vorweggenommene Sendeleistungsänderung einem Näherungswert der Zielwertänderung entspricht, die durch eine Näherungslösung der zweiten Komponente ermittelt wird.

**14.** Basisstation nach Anspruch 13, **dadurch gekennzeichnet, dass** sie - wobei der Leistungssteuerungsalgorithmus gleichzeitig die Sendeleistung von mindestens zwei Kanälen, darunter ein Datenkanal und ein Steuerkanal, in Abhängigkeit von einem Zielwert der Übertragungsqualität steuert und wobei die Sendeleistung des Steuerkanals gegenüber der des Datenkanals versetzt ist, - zur Steuerung der Sendeleistung in Downlink-Richtung umfasst:

- Mittel, um im Fall der Änderung des Zielwertes auf die Sendeleistung des Datenkanals und/oder auf die Sendeleistung des Steuerkanals und/oder auf den Offset der Sendeleistung des Steuerkanals gegenüber der Sendeleistung des Datenkanals vorweggenommene Änderungen anzuwenden, mit deren Hilfe eine vorweggenommene Sendeleistungsänderung des Datenkanals erzielt werden kann, die dem Näherungswert der Zielwertänderung entspricht.

**15.** Basisstation nach Anspruch 14, **dadurch gekennzeichnet, dass** sie außerdem umfasst:

- Mittel, um zu bewirken, dass im Fall der Änderung des Zielwertes die vorweggenommenen Änderungen der Sendeleistung des Datenkanals und/oder der Sendeleistung des Steuerkanals und/oder des Offsets der Sendeleistung des Steuerkanals gegenüber dem Datenkanal die Möglichkeit bieten, dass vor und nach der Änderung des Zielwertes sowie über dieselbe Referenzperiode jeweils dieselbe Energie des im Steuerkanal übertragenen Signals vorhanden ist.

**16.** Basisstation nach einem der Ansprüche 13 bis 15, **dadurch gekennzeichnet, dass** sie umfasst:

- Mittel, um auf den Offset der Sendeleistung des Steuerkanals gegenüber der Sendeleistung des Datenkanals eine vorweggenommene Änderung anzuwenden, die dem Gegenteil des Näherungswertes der Zielwertänderung entspricht.

**17.** Basisstation nach einem der Ansprüche 13 bis 15, **dadurch gekennzeichnet, dass** sie umfasst:

- Mittel, um auf die Sendeleistung des Datenkanals und auf die Sendeleistung des Steuerkanals eine vorweggenommene Änderung anzuwenden, die dem Näherungswert der Zielwertänderung entspricht.

**18.** Basisstation nach einem der Ansprüche 13 bis 17, **dadurch gekennzeichnet, dass** sie umfasst:

- Mittel, um die zweite Komponente, die ihr von einem Basisstationen-Controller für die Leistungssteuerung in Uplink-Richtung signalisiert wird, zur Bestimmung des Näherungswertes der Zielwertänderung für die Downlink-Richtung zu nutzen.

**19.** Mobilstation, umfassend Mittel zur Implementierung eines Leistungssteuerungsalgorithmus zur Steuerung der Sendeleistung in Uplink-Richtung in Abhängigkeit von einem Zielwert der Übertragungsqualität, **dadurch gekennzeichnet, dass** sie umfasst:

- Mittel, um im Fall der Änderung des Zielwertes - wobei diese Änderung des Zielwertes angewendet wird, um die Auswirkungen eines so genannten komprimierten Übertragungsmodus zu kompensieren, bei dem die Übertragung während Übertragungsunterbrechungen unterbrochen wird und bei dem die Übertragungsrate in entsprechender Weise erhöht wird, um die Übertragungsunterbrechungen zu kompensieren, und wobei die Änderung des Zielwertes eine erste Komponente umfasst, die zur Kompensierung der Auswirkungen dieser Übertragungsratenerhöhung bestimmt ist, und eine zweite Komponente, die zur Kompensierung der anderen Auswirkungen der Übertragungsunterbrechungen bestimmt ist, - eine vorweggenommene Sendeleistungsänderung in entsprechender Weise anzuwenden, wobei die vorweggenommene Sendeleistungsänderung einem Näherungswert der Zielwertänderung entspricht, die durch eine Näherungslösung der zweiten Komponente ermittelt wird.

**20.** Mobilstation nach Anspruch 19, **dadurch gekennzeichnet, dass** sie - wobei der Leislungssleuerungsalgorithmus gleichzeitig die Sendeleistung von mindestens zwei Kanälen, darunter ein Datenkanal und ein Steuerkanal, in Abhängigkeit von einem Zielwert der Übertragungsqualität steuert und wobei die Sendeleistung des Steuerkanals gegenüber der des Datenkanals versetzt ist, - zur Steuerung der Sendeleistung in Uplink-Richtung umfasst:

- Mittel, um im Fall der Änderung des Zielwertes auf die Sendeleistung des Datenkanals und/oder auf die Sendeleistung des Steuerkanal und/oder auf den Offset der Sendeleistung des Steuerkanals gegenüber der Sendeleistung des Datenkanals vorweggenommene Änderungen anzuwenden, mit deren Hilfe eine vorweggenommene Sendeleistungsänderung des Datenkanals erzielt werden kann, die dem Näherungswert der Zielwertänderung entspricht.

**21.** Mobilstation nach Anspruch 20, **dadurch gekennzeichnet, dass** sie außerdem umfasst:

- Mittel, um zu bewirken, dass im Fall der Änderung des Zielwertes die vorweggenommenen Änderungen der Sendeleistung des Datenkanals und/oder der Sendeleistung des Steuerkanals und/oder des Offsets der Sendeleistung des Steuerkanals gegenüber dem Datenkanal die Möglichkeit bieten, dass vor und nach der Änderung des Zielwertes sowie über dieselbe Referenzperiode jeweils dieselbe Energie des im Steuerkanal übertragenen Signals vorhanden ist.

**22.** Mobilstation nach einem der Ansprüche 20 und 21, **dadurch gekennzeichnet, dass** sie umfasst:

- Mittel, um auf den Offset der Sendeleistung des Steuerkanals gegenüber der Sendeleistung des Datenkanals eine vorweggenommene Änderung anzuwenden, die dem Gegenteil des Näherungswertes der Zielwertänderung entspricht.

**23.** Mobilstation nach einem der Ansprüche 20 und 21, **dadurch gekennzeichnet, dass** sie umfasst:

- Mittel, um auf die Sendeleistung des Datenkanals und auf die Sendeleistung des Steuerkanals eine vorweggenommene Änderung anzuwenden, die dem Näherungswert der Zielwertänderung entspricht.

**24.** Mobilstation nach einem der Ansprüche 19 bis 23, **dadurch gekennzeichnet, dass** sie umfasst:

- Mittel, um die zweite Komponente, die ihr von einem Basisstationen-Controller für die Leistungssteuerung in Downlink-Richtung signalisiert wird, zur Bestimmung des Näherungswertes der Zielwertänderung für die Uplink-Richtung zu nutzen.

**25.** Basisstationen-Controller, umfassend Mittel, um an eine Basisstation beziehungsweise an eine Mobilstation eine so genannte zweite Komponente einer Änderung des Zielwertes der Übertragungsqualität für einen Leistungssteuerungsalgorithmus zu signalisieren, welcher die Sendeleistung in Uplink-Richtung beziehungsweise in Downlink-Richtung in Abhängigkeit vom Zielwert der Übertragungsqualität steuert, - wobei diese Änderung des Zielwertes angewendet wird, um die Auswirkungen eines so genannten komprimierten Überiragungsmodus zu kompensieren, bei dem die Übertragung während Übertragungsunterbrechungen unterbrochen wird und bei dem die Übertragungsrate in entsprechender Weise erhöht wird, um die Übertragungsunterbrechungen zu kompensieren, und wobei die Änderung des Zielwertes eine erste Komponente umfasst, die zur Kompensierung der Auswirkungen dieser Übertragungsratenerhöhung bestimmt ist, und eine zweite Komponente, die zur Kompensierung der anderen Auswirkungen der Übertragungsunterbrechungen bestimmt ist, - **dadurch gekennzeichnet, dass** - wobei eine vorweggenommene Sendeleistungsänderung in Entsprechung zu einer Änderung des Zielwertes angewendet wird und wobei die vorweggenommene Sendeleistungsänderung einem Näherungswert der Zielwertänderung entspricht, die durch eine Näherungslösung dieser zweiten Komponente ermittelt wird, - dieser Basisstationen-Controller umfasst:

- Mittel, um an eine Basisstation und an eine Mobilstation denselben Wert für diese zweite Komponente für die beiden Übertragungsrichtungen zu signalisieren.

# FIG_1

T2    T1

# FIG_2

| Pilot | TPC | TFCI | |

DPCCH    DPDCH

# FIG_3

UTRAN

RNC

NODE B

NODE B

UE

# FIG_4

# FIG_5

UTRAN

RNC

~2

NODE B

NODE B

~1

UE

# FIG_6

## RÉFÉRENCES CITÉES DANS LA DESCRIPTION

**Documents brevets cités dans la description**

- EP 99401766 A
- EP 00400357 A